# EUROPÄISCHE PATENTSCHRIFT

(11) **EP 2 986 428 B1**
(45) Veröffentlichungstag und Bekanntmachung des Hinweises auf die Patenterteilung: **07.03.2018**
(21) Anmeldenummer: 14718325.5
(22) Anmeldetag: 11.04.2014
(51) Int. Cl.: B26F 1/00, B26D 5/06, B26D 7/27, B26D 7/01, B23P 23/04, B26F 1/14, B26F 1/02, B26F 1/38, B25J 11/00, B26D 7/26, B25J 15/00

(54) **STANZMASCHINE ZUM STANZEN VON POLYMEREN KFZ-BAUTEILEN**
PUNCH FOR PUNCHING POLYMERIC MOTOR VEHICLE COMPONENTS
MACHINE DE POINÇONNAGE DE COMPOSANTS EN POLYMÈRE POUR VÉHICULES AUTOMOBILES

(30) Priorität: 15.04.2013 DE 202013101583 U
(43) Veröffentlichungstag der Anmeldung: 24.02.2016
(73) Patentinhaber: REHAU AG + Co, 95111 Rehau (DE)
(72) Erfinder: SCHWARZ, Ralph, 91710 Gunzenhausen (DE)
(86) Internationale Anmeldenummer: PCT/EP2014/000977
(87) Internationale Veröffentlichungsnummer: WO 2014/169999

(56) Entgegenhaltungen:
- DE-A1-102005 060 026
- DE-A1-102009 019 644
- FR-A1- 2 962 929

## Beschreibung

Die Erfindung betrifft eine Stanzmaschine mit den Merkmalen des Oberbegriffs des Patentanspruchs 1. Eine solche Stanzmaschine ist aus der DE 10 2009 019 644 A1 sowie der DE 10 2005 060 026 A1 bekannt, wobei letztere die Merkmale des Oberbegriffs von Anspruch 1 offenbart. Derartige Stanzmaschinen werden beispielsweise bei der Produktion von Kfz-Stoßfängern eingesetzt, um in den Stoßfängern Ausnehmungen vorzusehen, welche zur Integration von Parksensoren, Scheinwerferreinigungsanlagen, Abstandshaltern und dergleichen erforderlich sind.
Gemäß dem Stand der Technik ist die konstruktive Gestaltung der Stanzmaschine häufig exakt auf das jeweilige polymere Kfz-Bauteil abgestimmt. Die Fertigung eines anders gestalteten Bauteils ist mittels der Maschine ohne eine aufwendige Umrüstung nicht möglich. Dies hat beispielsweise zur Folge, dass allein für den Ersatzteildienst für Kfz-Bauteile von bereits ausgelaufenen Kraftfahrzeug-Serien eine solche Stanzmaschine weiterhin vorgehalten werden muss, mit entsprechenden Platzbedarf und auch Bindung von Maschinenkapazität.
Vor dem beschriebenen Hintergrund liegt der Erfindung die Aufgabe zugrunde, eine Stanzmaschine mit den eingangs beschriebenen Merkmalen anzugeben, welche flexibel einsetzbar ist und insbesondere mit geringem Aufwand an die Bearbeitung einer geänderten Bauteilgeometrie angepasst werden kann.
Erfindungsgemäß wird diese Aufgabe durch die Merkmale des Patentanspruchs 1 gelöst. Die Erfindung beruht auf der Erkenntnis, dass durch die Montage von Stanzwerkzeug und Stanzmatrize auf jeweils einem beweglichen Träger dieser durch eine einfache Bewegung die Stanzmaschine auf eine anders gestaltete Bearbeitung einstellen kann. Ein im Stand der Technik übliches Umrüsten der Bearbeitungseinrichtungen mittels beispielsweise Lösen von Schraubverbindungen, Neujustierung und wieder Arretierung ist damit hinfällig. An dem Träger können neben dem Stanzwerkzeug bzw. der Stanzmatrize insbesondere auch mehrere Bearbeitungseinrichtungen vorgesehen sein, beispielsweise zwei, drei oder auch mehr. Durch eine entsprechende Bewegung des Trägers ist es folglich möglich, jede der am Träger montierten Bearbeitungseinrichtungen in Bearbeitungsposition zu bringen, ohne dass es hierfür eines aufwendigen Umrüstvorgangs bedarf. So können beispielsweise bei einem insgesamt vier Bearbeitungseinrichtungen aufweisenden Träger vier verschiedene Bearbeitungsschritte durch eine entsprechende Bewegung des Trägers nacheinander vorgenommen werden. Hierbei kann es sich um mehrere unterschiedliche Stanzvorgänge zur Anbringung verschiedenartiger Ausnehmungen im polymeren Kfz-Bauteil handeln, oder aber auch um unterschiedliche Bearbeitungsvorgänge, beispielsweise eine Kombination von Stanzen mit Schweißen und / oder Kleben.

Zweckmäßigerweise ist der Träger drehbeweglich ausgebildet, so dass durch eine Drehbewegung des Trägers die weitere Bearbeitungseinrichtung in eine Bearbeitungsposition bringbar ist. Im Rahmen der Erfindung liegt es hierbei insbesondere, dass die Drehachse des Trägers zumindest im Wesentlichen senkrecht, vorzugsweise senkrecht, zur Bearbeitungsrichtung der Stanzvorrichtung ausgerichtet ist. Durch eine einfache Rotationsbewegung des Trägers ist es folglich möglich, die unterschiedlichen Bearbeitungseinrichtungen in Bearbeitungsposition zu bringen. In diesem Zusammenhang ist es insbesondere zweckmäßig, dass der Träger sternförmig ausgebildet ist. Die Rotationsbewegung erfolgt üblicherweise über einen elektrischen Antrieb, z.B. einen Servomotor. Neben dem Stanzwerkzeug und der Stanzmatrize kann zusätzlich mindestens eine weitere Bearbeitungsvorrichtung vorgesehen sein, die bei derselben Winkelstellung des Trägers in eine Bearbeitungsposition bringbar ist.

Erfindungsgemäß ist sowohl das Stanzwerkzeug als auch die Stanzmatrize an jeweils einen beweglichen Träger befestigt. Durch eine entsprechende Bewegung beider Träger können somit die beiden zueinander passenden Bearbeitungseinrichtungen, z.B. ein weiteres Stanzwerkzeug und eine weitere Stanzmatrize oder ein Schweißwerkzeug und ein Niederhalter bzw. eine Klebstoff-Applikationsvorrichtung und ein Niederhalter, in Bearbeitungsposition gebracht werden.

Erfindungsgemäß sind ferner die Träger an einem C-förmigen Bügel angeordnet, an dem die gesamte Stanzvorrichtung montiert ist. Insbesondere bei kleinen Stückzahlen ist es zweckmäßig, dass der Bügel an einem Roboter montiert ist. In diesem Fall werden durch eine entsprechende Verfahrbewegung des Roboters entlang des zu bearbeitenden Kfz-Bauteils, kombiniert mit der zuvor bereits beschriebenen Bewegung des Trägers, nacheinander mehrere Bearbeitungsvorgänge durchgeführt, bei denen es sich um mehrere hintereinander vorzusehende Stanzvorgänge oder aber auch um Kombinationen von Stanz- und / oder Schweiß- und / oder Klebvorgängen handeln kann.

Alternativ hierzu ist es aber auch möglich, dass der Bügel ortsfest angeordnet ist und zwecks Einstellung der exakten Bearbeitungsposition mittels mindestens eines Elektromotors, vorzugsweise eines Servomotors, verstellbar ist. Diese Ausführungsform ist insbesondere für größere Stückzahlen zweckmäßig. In diesem Fall spricht man von einem sogenannten bauteilgeführten Prozess, bei dem das Bauteil an der Stanzvorrichtung vorbeigeführt wird. Dieses muss dann für den jeweiligen Bearbeitungsschritt über den Servomotor lediglich exakt auf die genaue Bearbeitungsposition eingestellt werden.

Wie zuvor bereits beschrieben, kann die weitere Bearbeitungseinrichtung mindestens ein Schweißwerkzeug und / oder mindestens eine Klebstoff-Applikationsvorrichtung und / oder mindestens ein weiteres Stanzwerkzeug umfassen. Insgesamt ist hierdurch eine sehr große Flexibilität hinsichtlich der Bearbeitung des polymeren Kfz-Bauteils gewährleistet.

Ein besonders großer Vorteil der erfindungsgemäßen Lehre ergibt sich bei der Bearbeitung unterschiedlicher Kfz-Bauteilgeometrien. So kann beispielsweise die Stanzmaschine durch eine Bewegung des Trägers bzw. der Träger auf die Bearbeitung eines anderen Kfz-Bauteils eingestellt werden. Im Rahmen der Erfindung liegt es insbesondere aber auch, dass der auf ein bestimmtes Kfz-Bauteil abgestimmte Träger lösbar mit der Stanzmaschine verbunden ist und dass mindestens ein auf ein anders gestaltetes Kfz-Bauteil abgestimmter Wechselträger vorgesehen ist, gegen den der Träger austauschbar ist. Bei einem Wechsel der Gestalt des zu bearbeitenden Kfz-Bauteils, beispielsweise bei einem Wechsel einer Stoßfängerbearbeitung eines bestimmten Serienmodells auf eine Stoßfängerbearbeitung eines anderen Serienmodells, muss folglich lediglich der Träger gegen den Wechselträger ausgetauscht werden und schon ist die Stanzmaschine im Wesentlichen für die Bearbeitung des neuen Kfz-Bauteils funktionsbereit. Es muss folglich nicht mehr für eine einzige Bauteilgeometrie eine gesamte Stanzmaschine vorgehalten werden, sondern es können letztendlich mehrere, verschiedenartige Bauteilgeometrien ohne große Umrüstung der Stanzmaschine durch einen einfachen Wechsel des Trägers für die Bearbeitung der neuen Geometrie bereit gemacht werden.

Die erfindungsgemäße Lehre findet insbesondere Einsatz bei Stanzvorgängen von polymeren Kfz-Stoßfängern, ist aber grundsätzlich auch für alle anderen Arten polymerer Kfz-Bauteile, bei denen Stanzprozesse durchgeführt werden müssen, geeignet.

Im Folgenden wird die Erfindung anhand einer lediglich ein Ausführungsbeispiel darstellenden Zeichnung ausführlich erläutert. Es zeigen schematisch:
- Fig. 1: eine erfindungsgemäße Stanzmaschine in stark vereinfachter Darstellung,
- Fig. 2: eine alternative Ausführungsform der Erfindung in einer zu Fig. 1 analogen Darstellung,
- Fig. 3: eine erfindungsgemäße Stanzvorrichtung in einer Detailansicht und
- Fig. 4: eine Teilansicht der in Fig. 3 dargestellten Vorrichtung.

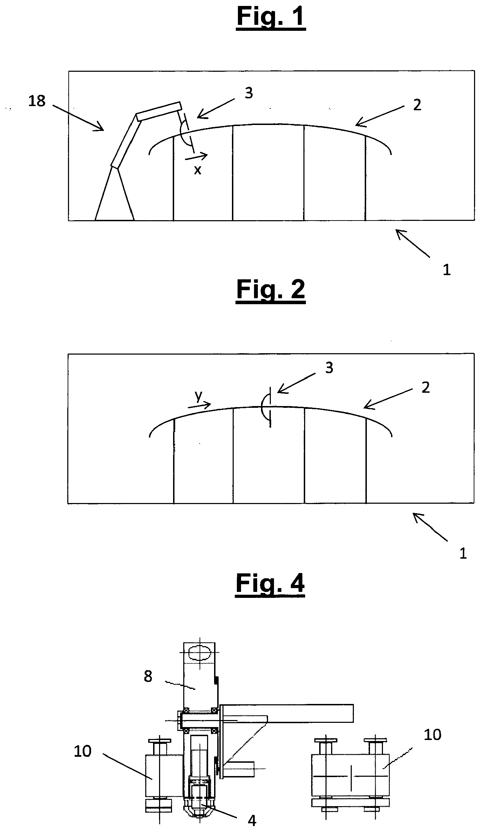

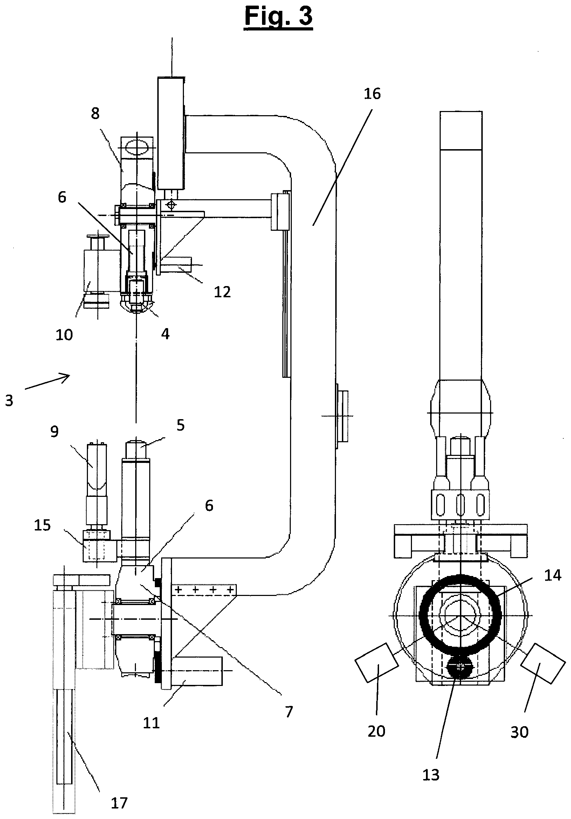

Die Figuren 1 und 2 zeigen jeweils eine Stanzmaschine zum Stanzen von polymeren Kfz-Stoßfängern. Die Stanzmaschinen weisen ein schematisch dargestelltes Maschinengestell 1 sowie nicht näher dargestellte Vorrichtungen zur Fixierung des Kfz-Stoßfängers 2 auf dem Maschinengestell 1 auf. Den Figuren ist ferner zu entnehmen, dass eine Stanzvorrichtung 3 vorgesehen ist, wobei die Stanzvorrichtung 3 ein Stanzwerkzeug 4 sowie eine Stanzmatrize 5 umfasst (s. hierzu Detaildarstellung in Figuren 3 und 4).

Der Fig. 3 ist zu entnehmen, dass das Stanzwerkzeug 4 und die Stanzmatrize 5 jeweils in einer Aufnahmevorrichtung 6 eines beweglichen Trägers 7, 8 befestigt sind, wobei die Träger 7, 8 jeweils mehrere weitere Aufnahmevorrichtungen 6 zur Befestigung weiterer Bearbeitungseinrichtungen 9, 10 aufweisen. Neben den Bearbeitungseinrichtungen 3, 4, 9, 10 sind im Winkel von α = 120° (s. Fig. 3 rechte Darstellung) auf den Trägerachsen a, b versetzt ebenfalls Bearbeitungseinrichtungen 20, 30 vorgesehen. Insbesondere einer vergleichenden Betrachtung der linken und rechten Darstellung in Fig. 3 ist zu entnehmen, dass die Träger 7, 8 drehbeweglich ausgebildet und jeweils senkrecht zur Bearbeitungsrichtung der Stanzvorrichtung 3 ausgerichtet sind. Folglich können durch eine einfache Rotationsbewegung der Träger 7, 8 unterschiedliche Bearbeitungseinrichtungen 3, 4, 9, 10, 20, 30 in Arbeitsposition gebracht werden. Diese Rotationsbewegung wird jeweils von einem Servomotor 11, 12 ausgeführt, welcher ein Antriebsrad 13 aufweist, welches mit einem Abtriebsrad 14 der Träger 7, 8 zusammenwirkt. Die Träger 7, 8 besitzen jeweils eine sternförmige Geometrie. Die Fig. 3 und 4 zeigen neben den Bearbeitungseinrichtungen Stanzwerkzeug 4 und Stanzmatrize 3 weitere Bearbeitungeinichtungen, nämlich Schweißsonotroden 9 zur Durchführung von Schweißvorgängen, die in einer entsprechenden Wechselaufnahme 15 montiert ist, sowie einen Niederhalter 10 mit Niederhalterkissen, der für Schweiß- und Klebvorgänge zur Fixierung des Stoßfängers 2 benötigt wird. In der rechten Darstellung der Fig. 3 ist nur der untere Träger 7 in einer Frontansicht bzw. im Schnitt dargestellt. Den Figuren ist zu entnehmen, dass die Träger 7, 8 an einem C-förmigen Bügel 16 angeordnet ist, an dem die gesamte Stanzvorrichtung 3 montiert ist. In Fig. 3 ist ferner eine Vorschubeinheit 17 für die Schweißsonotroden 9 dargestellt. Die Fig. 4 zeigt den oberen Träger 8 in einer Einzeldarstellung, wobei rechts der Niederhalter noch einmal separat in einer Seitenansicht gezeigt ist.

Bei der Fertigung in der Arbeitsstellung gemäß Fig. 3 wird zunächst ein Stanzvorgang mit dem Stanzwerkzeug 3 und der Stanzmatrize 4 durchgeführt. Danach wird der C-Bügel 16 ein Stück weit in der Zeichenebene nach rechts verfahren, so dass nunmehr die Schweißsonotroden 9 und der Niederhalter 10 für einen nachfolgenden Schweißvorgang an derselben Stelle des Stoßfängers 2 entsprechend positioniert sind. Mittels der Vorschubeinheit 17 werden sodann die Schweißsonotroden 9 aus der Wechselaufnahme 15 herausgehoben und für den Schweißvorgang gegen den entsprechenden Abschnitt des Stoßfängers 2 zugestellt. Folglich können bei der in Fig. 3 dargestellten Winkelstellung der Träger 7, 8 neben dem Stanzwerkzeug 3 und der Stanzmatrize 4 zusätzlich weitere Bearbeitungsvorrichtungen 9, 10 in eine Bearbeitungsposition gebracht werden. Nach diesem kombinierten Stanz- und Schweißvorgang wird der C-Bügel 16 zur nächsten Bearbeitungsstelle des Stoßfängers verfahren, wobei durch eine einfache Drehung der Träger 7, 8 andere Bearbeitungswerkzeuge 20, 30 in eine Bearbeitungsposition gebracht werden können. Alternativ hierzu kann der C-Bügel 16 aber auch ortsfest sein und der Stoßfänger 2 für die einzelnen Bearbeitungsschritte bewegt werden. Diese beiden Methoden werden im nachfolgenden Abschnitt im Zusammenhang mit den Fig. 1 und 2 näher erläutert.

Beim Ausführungsbeispiel gemäß Fig. 1 ist der C-förmige Bügel 16 an einem Roboter 18 montiert. In diesem Fall werden durch eine Verfahrbewegung des Roboters 18 der C-Bügel 16 entlang des Kfz-Stoßfängers 2 bewegt und die Träger 7, 8 nach jedem Bearbeitungsschritt so gedreht, dass die für den nachfolgenden Bearbeitungsschritt jeweils passenden Bearbeitungseinrichtungen in Bearbeitungsposition gebracht werden. Die Bewegung des C-Bügels 16 ist durch die Pfeilrichtung x angedeutet. Auf diese Weise werden nacheinander an entsprechend unterschiedlichen Positionen des Stoßfängers 2 Bearbeitungsschritte vorgenommen. Hierbei kann es sich beispielsweise um mehrere aufeinanderfolgende Stanzvorgänge handeln, aber auch insbesondere um Kombinationen von Stanzvorgängen mit Schweiß- und / oder Klebvorgängen. Mittels der erfindungsgemäßen Lehre ist es folglich insbesondere auch möglich, an einer bestimmten Bearbeitungsposition des Stoßfängers 2 zunächst den Stanzvorgang vorzunehmen und danach an derselben Stelle einen Schweiß- bzw. Klebvorgang. Hierdurch kann beispielsweise zunächst ein Durchbruch für einen Parksensor gefertigt und anschließend direkt der entsprechende Sensorhalter am Stoßfänger 2 angeschweißt werden.

Bei der in Fig. 2 dargestellten Variante ist der C-Bügel 16 ortsfest angeordnet und der Stoßfänger 2 wird zur Durchführung von Bearbeitungsschritten an unterschiedlichen Positionen des Stoßfängers 2 am C-Bügel 16 vorbei geführt. Die Bewegung des Stoßfängers 2 ist durch die Pfeilrichtung y angedeutet. In Fig. 2 muss der ortsfeste C-Bügel 16 lediglich für den jeweiligen Bearbeitungsschritt exakt ausgerichtet werden, welches über einen bzw. mehrere nicht näher dargestellte Servomotoren erfolgt.

Im Rahmen der Erfindung liegt es insbesondere, dass die in den Figuren dargestellten Träger 7, 8 jeweils gegen (nicht näher dargestellte) Wechselträger ausgetauscht werden können, um die Stanzmaschine für die Bearbeitung eines anders gestalteten Kfz-Stoßfängers umzurüsten. Diese Umrüstung ist mit vergleichsweise sehr geringem Aufwand verbunden, da lediglich die Ummontage der Träger 7, 8 erfolgen muss und nur ggf. weitere geringfügige Umrüstjustierungen vorgenommen werden müssen. Gegenstand der Erfindung ist somit auch ein System bestehend aus der Stanzmaschine mit den beiden Trägern 7, 8 incl. Bearbeitungseinrichtungen 3, 4, 9, 10, welche für die Bearbeitung eines Stoßfängermodells A geeignet sind, sowie mindestens einem Paar Wechselträger mit Bearbeitungseinrichtungen, die zur Bearbeitung eines Stoßfängermodells B geeignet sind. Durch einen Austausch der Träger 7, 8 gegen die Wechselträger kann eine Umrüstung der Stanzmaschine von Modell A auf Modell B erfolgen.

## Patentansprüche

1. Stanzmaschine zum Stanzen von polymeren Kfz-Bauteilen, insbesondere Stoßfängern, mit
- einem Maschinengestell (1),
- mindestens einer Vorrichtung zur Fixierung eines polymeren Kfz-Bauteils (2) auf dem Maschinengestell (1) und
- mindestens einer Stanzvorrichtung (3),
wobei die Stanzvorrichtung (3) mindestens ein Stanzwerkzeug (4) sowie mindestens eine Stanzmatrize (5) umfasst, wobei sowohl das Stanzwerkzeug (4) als auch die Stanzmatrize (5) an einer Aufnahmevorrichtung (6) jeweils eines beweglichen Trägers (7, 8) befestigt ist, und wobei die Träger (7, 8) an einem C-förmigen Bügel angeordnet sind, an dem die gesamte Stanzvorrichtung (3) montiert ist,
**dadurch gekennzeichnet, dass**
die Träger (7, 8) jeweils mindestens eine weitere Aufnahmevorrichtung (6) zur Befestigung mindestens einer weiteren Bearbeitungseinrichtung (9, 10, 20, 30) aufweisen, so dass durch eine Bewegung des Trägers (7, 8) eine Einstellung der Stanzmaschine auf einen neuen, anders gestalteten Bearbeitungsschritt mit der weiteren Bearbeitungseinrichtung (9, 10, 20, 30) vornehmbar ist.

2. Stanzmaschine nach Anspruch 1, **dadurch gekennzeichnet, dass** der Träger (7, 8) drehbeweglich ausgebildet ist und durch eine Drehbewegung des Trägers (7, 8) die weitere Bearbeitungseinrichtung (20, 30) in eine Bearbeitungsposition bringbar ist.

3. Stanzmaschine nach Anspruch 2, **dadurch gekennzeichnet, dass** die Drehachse des Trägers (7, 8) zumindest im Wesentlichen senkrecht zur Bearbeitungsrichtung der Stanzvorrichtung (3) ausgerichtet ist.

4. Stanzmaschine nach Anspruch 2 oder 3, **dadurch gekennzeichnet, dass** neben dem Stanzwerkzeug (4) und der Stanzmatrize (5) zusätzlich mindestens eine weitere Bearbeitungsvorrichtung (9, 10) vorgesehen ist, die bei derselben Winkelstellung des Trägers (7, 8) in eine Bearbeitungsposition bringbar ist.

5. Stanzmaschine nach einem der Ansprüche 1 bis 4, **dadurch gekennzeichnet, dass** der Bügel (16) an einem Roboter (18) montiert ist.

6. Stanzmaschine nach einem der Ansprüche 1 bis 4, **dadurch gekennzeichnet, dass** der Bügel (16) mittels mindestens eines Elektromotors, vorzugsweise eines Servomotors, verstellbar ist.

7. Stanzmaschine nach einem der Ansprüche 1 bis 6, **dadurch gekennzeichnet, dass** die weitere Bearbeitungseinrichtung mindestens ein Schweißwerkzeug (9) und / oder mindestens eine Klebstoffapplikationsvorrichtung und / oder mindestens ein weiteres Stanzwerkzeug umfasst.

8. Stanzmaschine nach einem der Ansprüche 1 bis 7, **dadurch gekennzeichnet, dass** der auf ein bestimmtes Kfz-Bauteil (2) abgestimmte Träger (7, 8) lösbar mit der Stanzmaschine verbunden ist und dass mindestens ein auf ein anderes gestaltetes Kfz-Bauteil abgestimmter Wechselträger vorgesehen ist, gegen den der Träger austauschbar ist.

## Claims

1. A punching machine for punching polymeric automotive components, in particular bumpers, comprising
- a machine frame,
- at least one device for fixing a polymeric vehicle component (2) on the machine frame (1), and
- at least one punching device (3),
wherein the punching device (3) includes at least one punching tool (4) and at least one punching die (5), wherein both the punching tool (4) and the punching die (5) is attached on a receptacle device (6) of a movable carrier (7, 8), and wherein the carriers (7, 8) are arranged on a C-shaped bracket, on which the entire punching device (3) is mounted,
**characterized in that**
the carriers (7, 8) each comprise at least one further receptacle device (6) for fastening at least one further processing device (9, 10, 20, 30) so that by a movement of the carrier (7, 8), an adjustment of the punching machine to a new, different processing step with the further processing device (9, 10, 20, 30) can be performed.

2. The punching machine according to claim 1, **characterized in that** the carrier (7, 8) is rotationally movable, and by rotational movement of the carrier (7, 8), the further processing device (20, 30) can be brought into a processing position.

3. The punching machine according to claim 2, **characterized in that** the rotational axis of the carrier (7, 8) is at least substantially oriented perpendicular to a machining direction of the punching device (3).

4. The punching machine according to claim 2 or 3, **characterized in that** besides the punching tool (4) and the punching die (5), additionally at least one further processing device (9, 10) is provided, which can be brought in a processing position at the same angular position of the carrier (7, 8).

5. The punching machine according to one of claims 1 to 4, **characterized in that** both the bracket (16) is mounted on a robot (18).

6. The punching machine according to one of claims 1 to 4, **characterized in that** the bracket (16) is adjustable by means of at least one electric motor, preferably a servomotor.

7. The punching machine according to one of claims 1 to 6, **characterized in that** the further processing device includes at least one welding tool (9) and/or at least one adhesive application device and/or at least one further punching die.

8. The punching machine according to one of claims 1 to 7, **characterized in that** the carrier (7, 8), which is adapted to a specific vehicle component (2), is detachably connected to the punching machine, and **in that** at least one exchange carrier which is adapted to a vehicle component of another design is provided, with which the carrier can be replaced.

## Revendications

1. Machine d'estampage destinée à estamper des pièces polymères de véhicules automobiles, notamment des pare-chocs, comprenant
- un châssis de machine (1),
- au moins un dispositif destiné à fixer une pièce polymère (2) de véhicule automobile sur le châssis de machine (1), et
- au moins un dispositif d'estampage (3),
le dispositif d'estampage (3) comprenant au moins un outil d'estampage (4) ainsi qu'au moins une matrice d'estampage (5), aussi bien l'outil d'estampage (4) que la matrice d'estampage (5) étant fixés sur un dispositif de logement (6) de respectivement un support mobile (7, 8), et le support (7, 8) étant disposé sur un étrier en forme de C, sur lequel l'ensemble du dispositif d'estampage (3) est monté,
**caractérisée en ce que**
les supports (7, 8) présentent respectivement au moins un dispositif de logement (6) supplémentaire pour la fixation d'au moins un dispositif de traitement (9, 10, 20, 20) supplémentaire, de sorte qu'en raison d'un mouvement du support (7, 8) un réglage de la machine d'estampage peut être réalisé pour une nouvelle étape de traitement, conçue différemment, à l'aide du dispositif de traitement (9, 10, 20, 30) supplémentaire.

2. Machine d'estampage selon la revendication 1, **caractérisée en ce que** le support (7, 8) est réalisé de manière déplaçable en rotation et **en ce qu'**en raison d'un mouvement de rotation du support (7, 8), le dispositif de traitement (20, 30) supplémentaire peut être mis dans une position de traitement.

3. Machine d'estampage selon la revendication 2, **caractérisée en ce que** l'axe de rotation du support (7, 8) est orienté au moins essentiellement perpendiculairement au sens de traitement du dispositif d'estampage (3).

4. Machine d'estampage selon la revendication 2 ou 3, **caractérisée en ce que**, outre l'outil d'estampage (4) et la matrice d'estampage (5), au moins un dispositif de traitement (9, 10) supplémentaire est ménagé en plus, lequel, avec la même position angulaire du support (7, 8), peut être mis dans une position de traitement.

5. Machine d'estampage selon l'une quelconque des revendications 1 à 4, **caractérisée en ce que** l'étrier (16) est monté sur un robot (18).

6. Machine d'estampage selon l'une quelconque des revendications 1 à 4, **caractérisée en ce que** l'étrier (16) est réglable au moyen d'au moins un moteur électrique, de préférence au moyen d'un servomoteur.

7. Machine d'estampage selon l'une quelconque des revendications 1 à 6, **caractérisée en ce que** le dispositif de traitement supplémentaire comprend au moins un outil de soudage (9) et/ou au moins un dispositif d'application de colle et/ou au moins un outil d'estampage supplémentaire.

8. Machine d'estampage selon l'une quelconque des revendications 1 à 7, **caractérisée en ce que** le support (7, 8) adapté à une pièce (2) de véhicule déterminée est relié à la machine d'estampage de manière amovible et **en ce qu'**au moins un support interchangeable adapté à une autre pièce de véhicule automobile, de forme différente, est ménagé, avec lequel le support est interchangeable.
